# EUROPEAN PATENT SPECIFICATION

(11) **EP 2 579 605 B1**
(45) Date of publication and mention of the grant of the patent: **24.08.2016**
(21) Application number: 12006961.2
(22) Date of filing: 08.10.2012
(51) Int. Cl.: H04N 21/41, H04N 21/43, H04N 21/435, H04N 21/472, H04N 21/81, H04N 21/235, H04N 21/4722, H04N 21/437, H04N 21/8547, H04N 21/237

(54) **Synchronising digital media content**
Synchronisierung digitaler Medieninhalte
Synchronisation d'un contenu multimédia numérique

(30) Priority: 07.10.2011 AU 2011232766
(43) Date of publication of application: 10.04.2013
(73) Proprietor: Accenture Global Services Limited, Dublin 4 (IE)
(72) Inventor: Trainor, Stephen James, Longmont CO 80503 (US)
(74) Representative: Müller-Boré & Partner Patentanwälte PartG mbB

(56) References cited:
- WO-A1-2011/107536
- WO-A1-2012/028851
- WO-A2-03/003743
- US-A1- 2005 177 861
- US-A1- 2008 092 164
- US-A1- 2008 256 586
- US-A1- 2011 103 763

## Description

The present invention relates to synchronisation of content. In particular, although not exclusively, the invention relates to synchronisation of auxiliary content with primary content.

### BACKGROUND TO THE INVENTION

Digital media, such as digital television, is commonly used for entertainment purposes. However, digital media may also include audio and video streams for purposes other than entertainment.

Digital media of the prior art may include primary content, for example a television program, and auxiliary content, for example sponsored advertising. Travel programs may, for example, include primary content relating to a travel destination followed by, or interspersed with, auxiliary content relating to airfares, hotel bookings, or other products or services that are marketed to viewers of the travel program.

Interactivity with respect to digital media is also increasing in popularity. This may include voting, for example for a favourite contestant in a television show, via telephone. A telephone number with a plurality of codes may be provided during a television broadcast. Each code may correspond to a contestant or a vote, and may be entered by a viewer using a telephone number pad. Alternatively, a plurality of telephone numbers may be provided with each telephone number corresponding to a contestant or a vote.

A problem with known primary and auxiliary content systems described above is that the auxiliary content interrupts the primary content, as the different types of content share the same screen/medium. This may include a pause in a program in order to display the telephone numbers, for example. Another problem with known primary and auxiliary content systems above is that only limited information can be displayed in the auxiliary content, without the auxiliary content 'taking over' or diminishing the primary content.

Rich media systems include interactive multimedia content that may be displayed on a personal or shared device. The interactive multimedia content includes an interactive component, which may include a web page with interactive buttons. The layout of the interactivity stream with respect to the video stream may be defined. Rich media applications may be run on a personal computer, or a purpose built device.

A problem with known rich media systems is that they require a rich media enabled device to access the rich media content. There are multiple rich media standards and solutions, some of which are continuously developed, and a problem for consumers is that certain devices, such as televisions, are replaced relatively infrequently and are typically not upgradeable if a new standard is defined. Accordingly, there is a reluctance on the part of consumers to upgrade their devices, which in tum has resulted in an increased cost of implementation.

Audience measurements have been used by television networks for a long time to measure the popularity of a broadcast program. These may be performed using a questionnaire, for example, to obtain user feedback from a selected portion of a population.

More recently, audience recording devices have been used to record user feedback, and these devices are synchronised with the viewable content by means of a synchronization signal embedded within the broadcast. These devices represent an example of a prior arrangement where the broadcast of primary content is synchronised with another device. The synchronisation signal may be a short audio signal, for example, which triggers an event in the audience recording device.

However, the synchronisation arrangement implemented with audience recording devices suffers various problems. For example, the primary content in some instances is distorted by the synchronisation signal, e.g. a beep or tone. Another problem with audience recording devices is that headphones, speaker configurations, room acoustics, and other parameters may influence and distort the synchronisation signal, thus preventing a recognisable synchronisation signal from reaching the audience recording device. Yet another problem with audience recording devices described above is that a signal may be triggered multiple times, and/or at a time out of the control of the broadcaster. This may occur when a user records a program for later playback.

Accordingly, there is a requirement for a synchronisation arrangement that addresses or at least ameliorates one or more of the problems presently associated with synchronising primary and auxiliary content.

Document US 2008/0092164 A1 relates to communication networks and methods that provide supplemental content service. The supplemental content service provides synchronized supplemental content to a user over a communication network, the supplemental content being an enhancement to a primary content stream.

### SUMMARY OF THE INVENTION

According tone aspect, the present invention provides a computer implemented method according to claim 1 of coordinating presentation of auxiliary content on an auxiliary device with primary content on a primary device where the primary and auxiliary devices are separate devices (the primary device hereinafter also referred to as separate primary device), including: receiving, on a network interface of the auxiliary device, the auxiliary content and timing information relating to the auxiliary content from a data store, wherein the timing information is relative to a point in time and enables synchronisation of the auxiliary content with the primary content; synchronising, on a processor of the auxiliary device, the auxiliary content with the primary content using the timing information; and playing the auxiliary content on the auxiliary device.

This enables the auxiliary content to be displayed synchronously with the primary content, without disturbing or distorting the primary content. Additionally, the auxiliary content may contain detailed information, otherwise not able to be provided as part of the primary content.

The primary content may include live television. In this case, the timing information may be provided relative to a predetermined point in time.

The primary content may include video on demand (VOD). In this case, the timing information may be provided relative to a starting point of the video stream that may be activated on-demand. A synchronisation point may be explicitly provided to the auxiliary device.

According to an embodiment, the auxiliary content is updated. This enables dynamic generation and/or modification of the auxiliary content.

The timing information may include timestamps. Timestamps may be provided explicitly per event or object in the auxiliary content, and may be absolute or relative timestamps.

According to an embodiment, the auxiliary content may include instructions for a software application residing on the auxiliary device. Alternatively, the auxiliary content may include a web page, rich media, video and audio.

The auxiliary content may include advertisements, factual information, social networking information, recommendations, a quiz, a game, a voting application, historical information, purchase information, maps, links to further information and/or booking information relating to the primary content.

According to an embodiment, the auxiliary content may be adapted according to at least one of a location of the auxiliary device, a location associated with the auxiliary device, a language associated with the auxiliary device, a locale setting of the auxiliary device, a display resolution of the auxiliary device, a hardware or software feature of the auxiliary device, a cookie previously received by the auxiliary device, a state of an application running on the auxiliary device, a time of a request for content and an Internet Protocol address of the auxiliary device.

According to an embodiment, the method may further comprise: receiving, on a computer interface, dynamic timing information relating to an event in the primary content; and/or generating, on a computer processor, timing information for auxiliary content, wherein the auxiliary content includes an event and the timing information coordinates the event of the auxiliary content with the event of the primary content.

According to another aspect, the present invention provides a system according to claim 10 for coordination of auxiliary content with primary content, including: a content server, including: a synchronisation module for providing timing information to at least one auxiliary device; a transmission interface, for transmitting auxiliary content with the timing information; and an auxiliary device, including: a reception interface for receiving auxiliary content and timing information from the content server; a timing module that interprets the timeline associated with the auxiliary content and determines a presentation time of the auxiliary content; and a presentation module, for presenting the auxiliary content according to the presentation time.

According to an embodiment, the system further includes an on-demand content server for the primary content, wherein the on-demand content server includes a transmission interface for transmitting timing information to the auxiliary device.

The dynamic timing information may include a playback starting time, a pause time, and/or a jump-to time.

According to an embodiment, the system may be further operable to perform a method as described.

According to an embodiment, a computer implemented method of coordinating presentation of auxiliary content on an auxiliary device with primary content on a primary device, is provided including:
receiving, on a computer interface, timing information relating to an event in the primary content; and
generating, on a computer processor, timing information for auxiliary content, wherein the auxiliary content includes an event and the timing information coordinates the event of the auxiliary content with the event of the primary content.

According to another aspect there is provided a computer-program product comprising computer readable instructions, which when loaded and run in a computer system cause the computer system to perform a method as described.

The subject matter described in this specification can be implemented as a method or as a system or using computer program products, tangibly embodied in information carriers, such as a CD-ROM, a DVD-ROM, a semiconductor memory, signal and/or data stream, and a hard disk. Such computer program products may cause a data processing apparatus to conduct one or more operations described in this specification.

### BRIEF DESCRIPTION OF THE DRAWINGS

To assist in understanding the invention and to enable a skilled reader to put the invention into practical effect, embodiments of the invention are described below by way of example with reference to the accompanying drawings, in which:
FIG. 1 diagrammatically illustrates a content synchronisation system, according to an embodiment of the present invention;
FIG. 2 diagrammatically illustrates a content synchronisation system, according to another embodiment of the present invention;
**FIG. 3** illustrates a screenshot of auxiliary content according to an embodiment of the present invention;
**FIG. 4** illustrates simplified, exemplary source code of auxiliary content timing information according to an embodiment of the present invention;
**FIG.** 5 illustrates a flow diagram of a method of coordinating presentation of auxiliary content on an auxiliary device with primary content on a primary device according to an embodiment of the present invention; and
**FIG. 6** diagrammatically illustrates a computer system with which the present invention may be implemented.

Those skilled in the art will appreciate that minor deviations from the layout of components as illustrated in the drawings will not detract from the proper functioning of the disclosed embodiments of the present invention.

### DETAILED DESCRIPTION OF EMBODIMENTS OF THE INVENTION

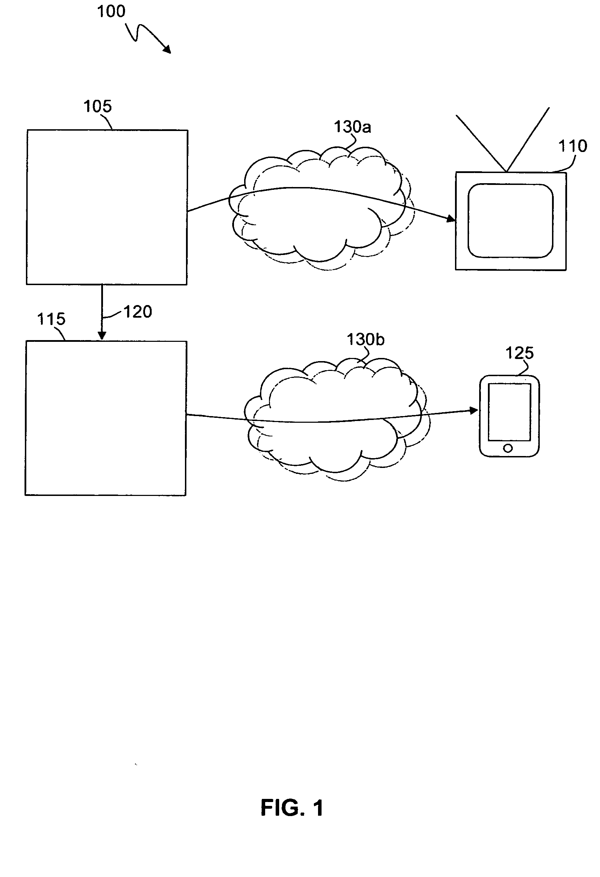

**FIG. 1** diagrammatically illustrates a content synchronisation system 100, for linear broadcast television, according to an embodiment of the present invention.

The content synchronisation system 100 includes a primary content server 105, which provides primary content to a plurality of primary devices 110. An example of a primary device is a television, but as will readily be understood by a person skilled in the art, any suitable device may be used.

The primary content server 105 may communicate timing data to an auxiliary content server 115 via an interface 120. The timing data may include electronic program guide (EPG) data, or similar broadcast scheduling information, and a broadcast schedule offset. The broadcast scheduling information provides information relating to when a program is due to start, and the broadcast schedule offset may be used to provide a difference between when a program was scheduled to start and when it actually started. Additionally the program timeline metadata may be provided for certain events in the primary content, and the program timeline metadata may be automatically or manually generated, either in advance, in the case of pre-recorded content or in real-time, in the case live content.

The interface 120 may include the Internet, or any other suitable data communications network, together with a suitable protocol.

The auxiliary content server 115 generates, or adds timing information to auxiliary content. The auxiliary content server 115 may generate the program timeline metadata, or receive the program timeline metadata from another source.

Generating the program timeline metadata may include detecting an event in the primary content, and associating part of the auxiliary content with the event in the primary content, for example. The auxiliary content server 115 may send the timing information in parallel to the auxiliary content, or embedded as part of the auxiliary content.

The timing information may include the timing data, or may be generated from the timing data. For example, the timing information may include the scheduling information, the scheduling offset and the program timeline metadata, which the auxiliary device may use to determine specific actions to be taken or content to be played out, displayed or otherwise performed at the appointed time. Alternatively, the timing information may be generated from the timing data and may include timing information which is interpreted directly by the auxiliary device.

The timing information may be provided using timestamps, or any other suitable timing means. The timing information is advantageously provided relative to a predetermined point in time. The timing information may be provided as absolute timestamps, e.g. a wall clock time, or relative to an event that is known to the auxiliary device.

The content synchronisation system 100 may be used for live television or recorded television.

The auxiliary content may be provided in segments or updated at a later time. For example, an auxiliary device may request auxiliary content periodically. This enables content to be generated dynamically, for example as an event occurs. Dynamically generated auxiliary content is particularly suited for live television.

The timing information may be provided in a timing information file, or as part of the auxiliary content, for example. An auxiliary device may receive auxiliary content for an entire program in a single file or stream. Static auxiliary content is particularly suited for recorded television as an auxiliary stream may be recorded once and re-broadcast multiple times. In this case, timestamps are advantageously provided relative to a point in time, which may correspond, directly or indirectly, to a broadcast time of the program.

The auxiliary content server 115 then provides auxiliary content to an auxiliary device 125. Examples of auxiliary devices 125 include mobile telephones, laptops, tablet computers, and any other suitable devices.

Protocols for transmission of auxiliary content to an auxiliary device 125 advantageously include HTTP or HTTPS. Alternative protocols include, but are not limited to, WebSockets, IP Multicast, and custom protocols designed on top an Internet Protocol (IP) or a non-IP based network.

The timing information may be specified and/or received hierarchically. For example, the auxiliary device may request a broadcast schedule followed by a broadcast offset schedule. From the broadcast schedule and the broadcast offset schedule, the auxiliary device may determine the current program that is being broadcast. The auxiliary device may then retrieve program timeline metadata for the current program.

The auxiliary content server 115 may generate, or add timing information to the auxiliary content, as it is being provided to the auxiliary device 125. This may be done using polling by the auxiliary device, persistent HTTP/TCP connections, and/or progressive download mechanisms, for example, as will be readily understood by a person skilled in the art.

The auxiliary content may include instructions for a software application residing on the auxiliary device. The instructions may include a reference to media files which are to be downloaded, or any other suitable instructions.

Alternatively or additionally, the auxiliary content may include a web page, rich media, video and/or audio.

The auxiliary content may include advertisements relating to the primary content. This may include an advertisement for a shop that sells a product shown in the primary content, for example. The auxiliary content may include factual information relating to the primary content. For example, a history program may have auxiliary content providing more detailed information about the primary content. The auxiliary content may include social networking information. The social networking information may include information about social networking contacts or 'friends' that are watching the same primary content, or any other particular program or content.

The auxiliary content may additionally or alternatively include recommendations relating to similar programs, a quiz, a game, a voting application, historical information, purchase information, maps, links to further information and/or booking information, relating to the primary content.

The auxiliary content may adapted according to the auxiliary device. For example, the auxiliary content may be adapted according to a location of the auxiliary device. This may include providing local content based upon positioning information, for example. The content may be adapted according to a location associated with the auxiliary device, e.g. a home or default location, a language associated with the auxiliary device, a locale setting of the auxiliary device, a display resolution of the auxiliary device, a hardware or software feature of the auxiliary device, a cookie previously received by the auxiliary device, a state of an application running on the auxiliary device, a time of a request for content and an Internet Protocol address of the auxiliary device.

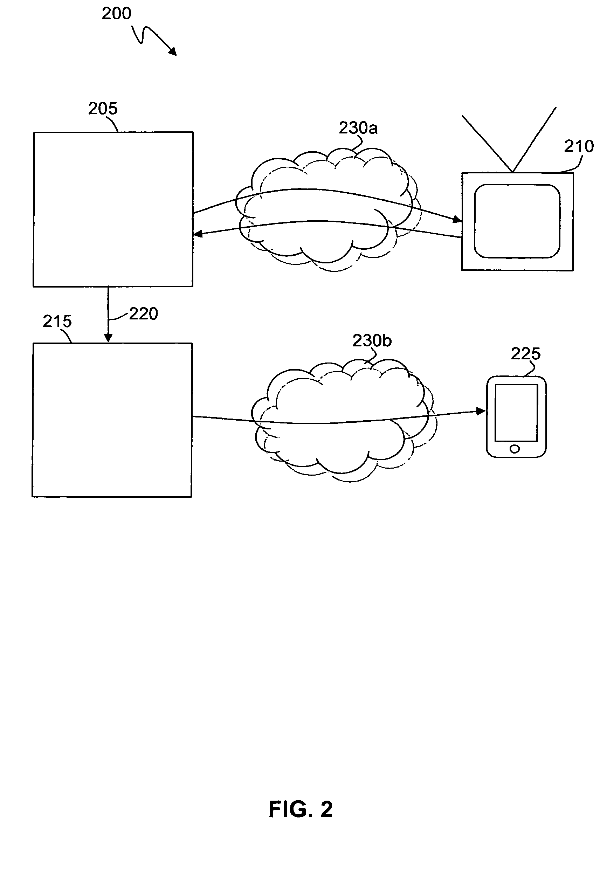

**FIG. 2** diagrammatically illustrates a content synchronisation system 200, for video on demand, according to an embodiment of the present invention.

The content synchronisation system 200 is similar to the content synchronisation system 100 and includes a primary content server 205, which provides primary content to a plurality of primary devices 210.

The primary content server 205 is a video on demand server, i.e. the primary content server 205 delivers content to the primary devices 210 based upon requests. This results in the plurality of primary devices 210 receiving the primary content at possibly different times.

The primary content server 205 communicates timing data to an auxiliary content server 215 via an interface 220. The timing may be provided for certain events in the primary content and may be automatically or manually generated. The timing data may be specific for a user or a session, and is advantageously identified by a user identifier or a session identifier.

The timing information may comprise static timing information in combination with playback offsets. In this case, only a playback offset need to be modified for a specific user or session, which is then used by an auxiliary device, together with the static timing information, to determine a playback timeline. The static timing information and the playback offsets may be stored and/or transmitted separately.

By enabling timing information to be specific for a user or a session, a user may play back content at any time, pause, fast forward, or rewind content, while still enabling synchronisation with auxiliary content.

The interface 220 may include the Internet, or any other suitable data communications network, together with a suitable protocol.

The auxiliary content server 215 generates, or adds timing information to auxiliary content. Alternative, the auxiliary content server 115 sends timing information in parallel to the auxiliary content.

The timing information may be provided using timestamps, or any other suitable timing means. The timing information is advantageously provided relative a predetermined point in time. The timing information may be provided as absolute timestamps, e.g. a wall clock time, or relative to an event that is known to the auxiliary device, for example the reception of a part of an auxiliary data file.

The auxiliary content may be provided in segments. For example, an auxiliary device may request auxiliary content periodically. This enables auxiliary content, and/or associated timing information to be updated based upon interaction with the primary content server. This may result in delaying presentation of a part of auxiliary content based upon a pause in the primary content.

The auxiliary content server 215 then provides auxiliary content to an auxiliary device 225. Examples of auxiliary devices 225 include mobile telephones, laptops, tablet computers, or any other suitable devices.

Protocols for transmission of auxiliary content to an auxiliary device 225 advantageously include HTTP or HTTPS. Alternative protocols include, but are not limited to, WebSockets, IP Multicast, or a custom protocol designed on top an Internet Protocol (IP) or a non-IP based network.

The auxiliary content server 215 may generate, or add timing information to the auxiliary content, as it is being provided to the auxiliary device 120. This may be done using polling by the auxiliary device, persistent HTTP/TCP connections, and/or progressive download mechanisms, for example, as will be readily understood by a person skilled in the art.

The auxiliary content is advantageously adapted for each user. Otherwise, the auxiliary content is similar to the auxiliary content of FIG. 1 and may comprise many forms.

The auxiliary content may be adapted according to the Auxiliary device as described in FIG. 1.

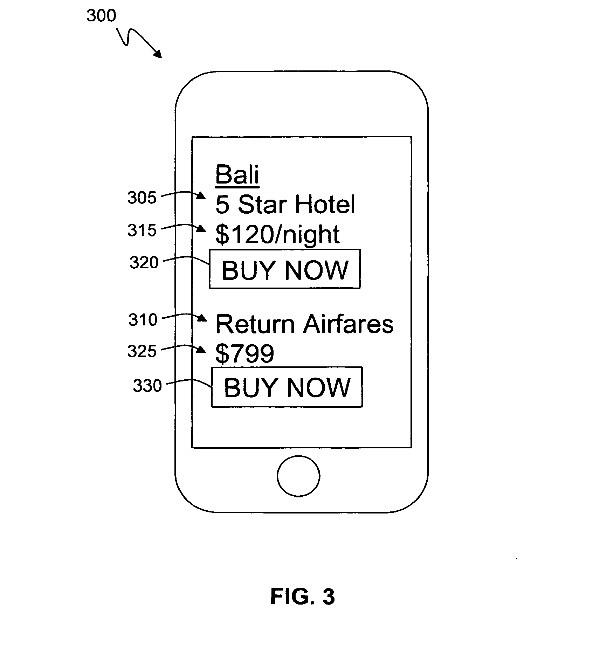

**FIG. 3** illustrates a screenshot 300 of auxiliary content according to an embodiment of the present invention.

The auxiliary content is associated with primary travel content. The auxiliary content includes further information about two products of the primary content, namely hotel information 305 and airfare information 310.

The hotel information 305 includes information about the hotel including a price per night 315. The price per night 315 has an associated buy now button 320, which may be used to purchase nights at the hotel.

The airfare information 310 includes information about the airfare including a return price 325. The return price 325 has an associated buy now button 330, which may be used to purchase the flight.

As will be readily understood by a person skilled in the art, the auxiliary content may comprise many forms, as discussed in FIG. 1.

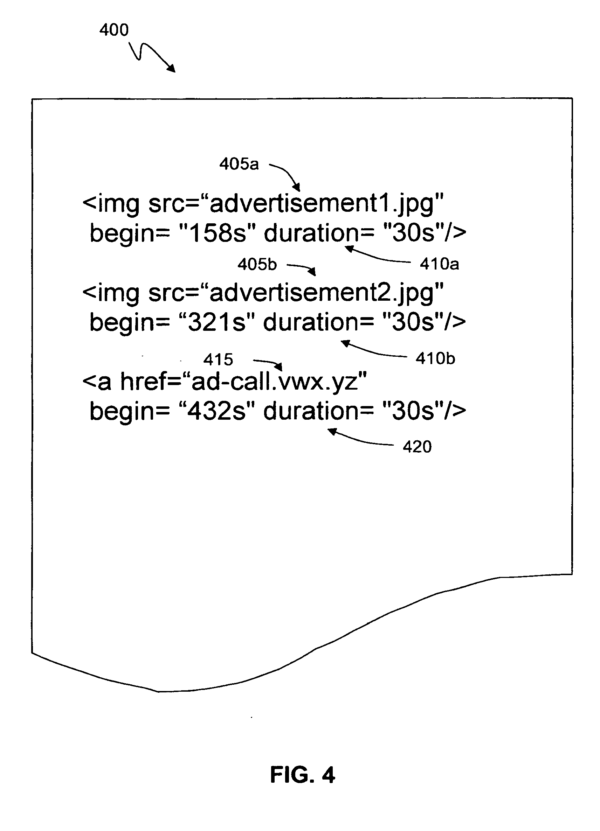

**FIG. 4** illustrates simplified, exemplary source code 400 of auxiliary content timing information according to an embodiment of the present invention.

The source code 400 includes two images 405a-b, with associated timing information 410a-b. The associated timing information 410a-b includes a start time, and a duration. The first image 405a is displayed 158 seconds after the start of a video clip and for 30 seconds. The second image 405b is displayed 321 s after the start of a video clip and for 30 seconds. The images 405a-b are statically, i.e. the images are defined when the source code 400 is generated.

The source code 400 additionally includes a dynamically resolved auxiliary content 415, which may be a call to an external advertisement server. The dynamically resolved auxiliary content 415 has associated timing information 420 similar to the associated timing information 410a-b.

As will be readily understood by a person skilled in the art, the auxiliary content may comprise computer program code, images, videos, audio signals, links to multimedia, or any other suitable format. Examples of suitable formats include Extensible Markup Language (XML), JavaScript Object Notation (JSON), HyperText Markup Language (HTML), extensible HyperText Markup Language (XHTML), Advanced Authoring Format (AAF) files, and Resource Description Framework (RDF) files.

As is understood by a person skilled in the art, the exemplary source code 400 is highly simplified, and does not include many of the features present in a real system, in order to illustrate the embodiment in a simple form.

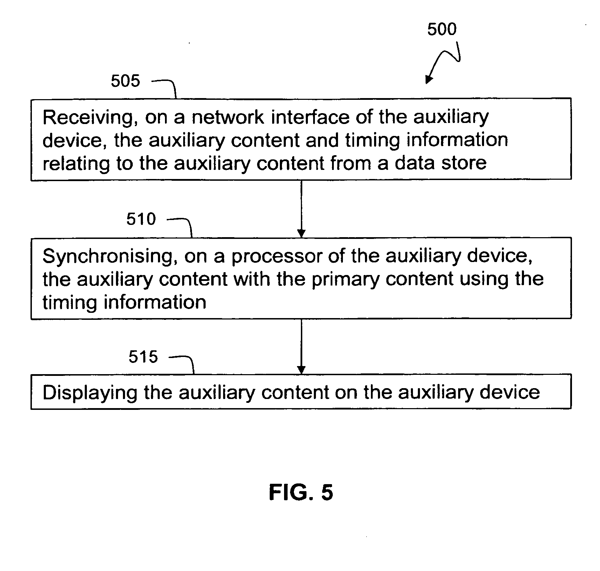

**FIG. 5** illustrates a flow diagram of a method 500 of coordinating presentation of auxiliary content on an auxiliary device with primary content on a primary device according to an embodiment of the present invention. The flow diagram shows the method 500 from the perspective of an auxiliary device such as the auxiliary device of FIG. 1.

At step 505, auxiliary content and timing information relating to the auxiliary content is received, on a network interface of the auxiliary device, from a data store. The data store may be located on an auxiliary content server 115 as described in FIG. 1, for example.

At step 510, the auxiliary content is synchronised with the primary content, on a processor of the auxiliary device, using the timing information. The timing information may include timestamps, for example, as described in FIG. 1.

At step 515, the auxiliary content is displayed on the auxiliary device.

The primary content and the auxiliary content are displayed on separate devices and the timing information is relative to a point in time known to the auxiliary device.

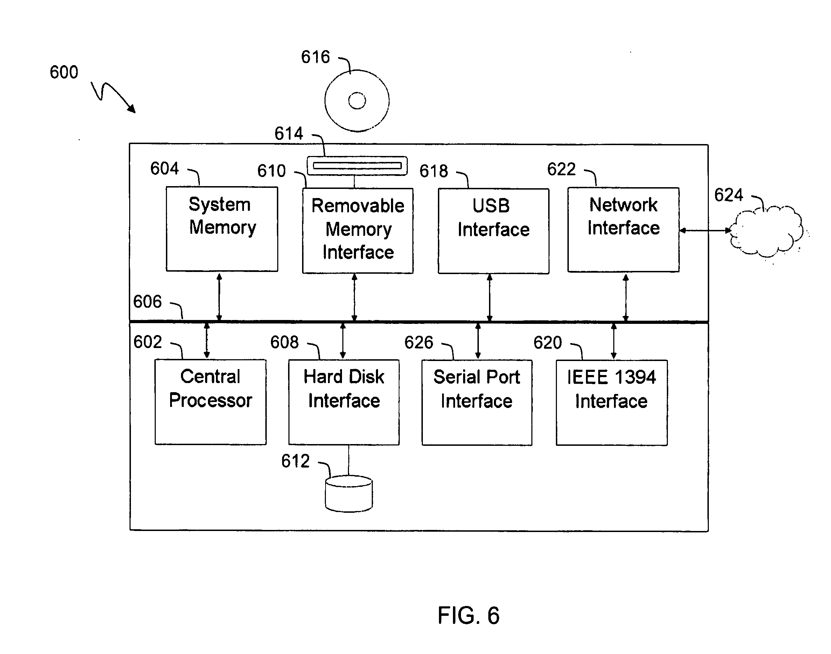

**FIG. 6** diagrammatically illustrates a computer system with which the present invention may be implemented.

The computer system 600 includes a central processor 602, a system memory 604 and a system bus 606 that couples various system components including the system memory 604 to the central processor 602. The system bus 606 may be any of several types of bus structure including a memory bus or memory controller, a peripheral bus, and a local bus using any of a variety of bus architectures. The structure of system memory 604 is well known to those skilled in the relevant field of technology and may include a basic input/output system (BIOS) stored in a read only memory (ROM) and one or more program modules such as operating systems, application programs and program data stored in random access memory (RAM).

The computer system 600 may also include a variety of interface units and drives for reading and writing data. In particular, the computer system 600 includes a hard disk interface 608 and a removable memory interface 610 respectively coupling a hard disk drive 612 and a removable memory drive 614 to system bus 606. Examples of removable memory drives 614 include magnetic disk drives and optical disk drives. The drives and their associated computer-readable media, such as a Digital Versatile Disc (DVD) 616 provide non-volatile storage of computer readable instructions, data structures, program modules and other data for the computer system 600. A single hard disk drive 612 and a single removable memory drive 614 are shown for illustration purposes only and with the understanding that the computer system 600 may include several of such drives. Furthermore, the computer system 600 may include drives for interfacing with other types of computer readable media.

The computer system 600 may include additional interfaces for connecting devices to system bus 606. FIG. 6 shows a universal serial bus (USB) interface 618 which may be used to couple a device to the system bus 606. An IEEE 1394 interface 620 may be used to couple additional devices to the computer system 600.

The computer system 600 can operate in a networked environment using logical connections to one or more remote computers or other devices, such as a server, a router, a network personal computer, a peer device or other common network node, a wireless telephone or wireless personal digital assistant. The computer 600 includes a network interface 622 that couples system bus 606 to a local area network (LAN) 624. Networking environments are commonplace in offices, enterprise-wide computer networks and home computer systems.

A wide area network (WAN), such as the Internet, can also be accessed by the computer system 600, for example via a modem unit connected to serial port interface 626 or via the LAN 624.

It will be appreciated that the network connections shown and described are exemplary and other ways of establishing a communications link between the computers can be used. The existence of any of various well-known protocols, such as Frame Relay, Ethernet,TCP/IP, FTP, HTTP and the like, is presumed, and the computer system 600 can be operated in a client-server configuration to permit a user to retrieve web pages from a web-based server. Furthermore, any of various conventional web browsers can be used to display and manipulate data on web pages.

The operation of the computer system 600 can be controlled by a variety of different program modules. Examples of program modules are routines, programs, objects, components, and data structures that perform particular tasks or implement particular abstract data types. The present invention may also be practiced with other computer system configurations, including hand-held devices, multiprocessor systems, microprocessor-based or programmable consumer electronics, mainframe computers, personal digital assistants and the like. Furthermore, the invention may also be practiced in distributed computing environments where tasks are performed by remote processing devices that are linked through a communications network. In a distributed computing environment, program modules may be located in both local and remote memory storage devices.

The terms synchronisation and coordinated presentation are used in the specification to denote a general synchronisation between playback of primary and auxiliary content, and the general synchronisation need not be exact. For example, in certain embodiments it may be suitable to have a synchronisation mismatch of approximately 30 seconds. In other words, a first client may play auxiliary content earlier than a second client, relative to the primary content. Such synchronisation may be achieved by estimating a playback on primary device, estimating a delivery time, or estimating a maximum acceptable synchronisation error.

In summary, the present invention allows auxiliary content to be synchronised with primary content, whereby the auxiliary content and primary content is displayed on separate devices. Auxiliary content may be synchronised with primary content that is either broadcast linearly or consumed on demand and is either live or pre-recorded. Auxiliary content may be associated with primary content retrospectively without a need to re-edit, prepare, finish or re-export the primary content. Third parties may associate auxiliary content with primary content without requiring access to master copies of the primary content or to re-publish master content. The auxiliary content may be displayed synchronously with primary content, without disturbing or distorting the primary content.

The above description is not intended to be exhaustive or to limit the invention to a single disclosed embodiment. As mentioned above, numerous alternatives and variations to the present invention will be apparent to those skilled in the relevant field of technology. Accordingly, while some alternative embodiments have been discussed specifically, other embodiments will be apparent or relatively easily developed, by those of requisite skill. Accordingly, this patent specification is intended to embrace all alternatives, modifications and variations of the present invention that have been discussed herein, and other embodiments that fall within the scope of the above described invention.

## Claims

1. A computer implemented method of coordinating presentation of auxiliary content on an auxiliary device (125; 225) with primary content on a primary device (110; 210) where the primary (110; 210) and auxiliary (125; 225) devices are separate devices, including:
receiving, on a network interface of the auxiliary device (125; 225), the auxiliary content and timing information relating to the auxiliary content from a data store, wherein the timing information is relative to a point in time, enables synchronisation of the auxiliary content with the primary content;
synchronising, on a processor of the auxiliary device (125; 225), the auxiliary content with the primary content using the timing information;
presenting the auxiliary content on the auxiliary device (125; 225) and presenting the primary content on the primary device (110; 210), **characterised in** :
receiving, on a network interface of the auxiliary device (125; 225), updated timing information relating to the auxiliary content from a data store; and
synchronising, on a processor of the auxiliary device (125; 225), the auxiliary content with the primary content using the updated timing information, the updated timing information based on a pause in the presentation of the primary content, whereby the synchronizing results in delayed presentation of a part of the auxiliary content,
wherein the primary content is on-demand content,
wherein the timing information includes dynamic timing information relating to an event in the primary content,
wherein the timing information further includes timestamps, which are provided explicit per event in the auxiliary content, and
wherein the timing information is specific for a session **in that** it is identified by a session identifier.

2. A computer implemented method according to claim 1, wherein the timing information is provided relative to a predetermined point of time.

3. A computer implemented method according to claim 1 or 2, wherein the timing information is provided relative to a playback starting point of a video on demand.

4. A computer implemented method according to claim 3, wherein a synchronisation point is explicitly provided to the auxiliary device (125; 225).

5. A computer implemented method according to any one of the preceding claims, wherein the auxiliary content includes instructions for a software application residing on the auxiliary device (125; 225).

6. A computer implemented method according to any one of the preceding claims, wherein the auxiliary content includes at least one of a web page, rich media, video and audio.

7. A computer implemented method according to any one of the preceding claims, wherein the auxiliary content includes at least one of advertisements, factual information, social networking information, recommendations, a quiz, a game, a voting application, historical information, purchase information, maps, links to further information and booking information, relating to the primary content.

8. A computer implemented method according to any one of the preceding claims, wherein the auxiliary content is adapted according to at least one of a location of the auxiliary device (125; 225), a location associated with the auxiliary device (125; 225), a language associated with the auxiliary device (125; 225), a locale setting of the auxiliary device (125; 225), a display resolution of the auxiliary device (125; 225), a hardware or software feature of the auxiliary device (125; 225), a cookie previously received by the auxiliary device (125; 225), a state of an application running on the auxiliary device (125; 225), a time of a request for content and an Internet Protocol address of the auxiliary device (125; 225).

9. A computer program product including computer readable instructions, which when loaded and run in a computer system, causes the computer system to perform operations according to a method of any one of the preceding claims.

10. A system for coordination of auxiliary content with primary content on separate devices, including:
a content server (115; 215), including:
a synchronisation module including timing information relating to auxiliary content;
a transmission interface, for transmitting auxiliary content and the timing information; and
an auxiliary device (125; 225), including:
a reception interface for receiving the auxiliary content and the timing information from the content server (115; 215);
a timing module that interprets the timing information and determines a presentation time of the auxiliary content;
a presentation module, for presenting the auxiliary content according to the presentation time and for presenting the primary content; **characterised in** further including
a module for receiving, on a network interface of the auxiliary device (125; 225), updated timing information relating to the auxiliary content from a data store; and
the module for synchronising, on a processor of the auxiliary device (125; 225), the auxiliary content with the primary content using the updated timing information, the updated timing information based on a paused in the presentation of the primary content, whereby the synchronizing results in delayed presentation of a part of the auxiliary content,
wherein the primary content is on-demand content,
wherein the timing information is dynamic timing information associated with the primary content relating to an event in the primary content,
wherein the timing information further includes timestamps, which are provided explicit per event in the auxiliary content, and
wherein the timing information is specific for a session **in that** it is identified by a session identifier.

11. A system according to claim 10, wherein the dynamic timing information includes at least one of a playback starting time, a pause time, and a jump-to time.

## Patentansprüche

1. Ein computerimplementiertes Verfahren zur Koordination der Präsentation eines Zusatzinhalts auf einer Zusatzvorrichtung (125; 225) mit einem primären Inhalt auf einer primären Vorrichtung (110; 210), wobei die primäre (110; 210) und die zusätzliche (125; 225) Vorrichtung separate Vorrichtungen sind, das Folgendes beinhaltet:
empfangen, an einer Netzwerkschnittstelle der zusätzlichen Vorrichtung (125; 225) des Zusatzinhalts und einer Zeitinformation über den Zusatzinhalt aus einem Datenspeicher (*data store*), wobei sich die Zeitinformation auf einen Zeitpunkt bezieht, eine Synchronisation des zusätzlichen Inhalts mit dem primären Inhalt ermöglicht;
synchronisieren, auf einem Prozessor der Zusatzvorrichtung (125; 225), des zusätzlichen Inhalts mit dem primären Inhalt unter Verwendung der Zeitinformation;
präsentieren des Zusatzinhalts auf der Zusatzvorrichtung (125; 225) und präsentieren des primären Inhalts auf der primären Vorrichtung (110; 210),
**gekennzeichnet durch Folgendes:**
empfangen, an einer Netzwerkschnittstelle der zusätzlichen Vorrichtung (125; 225) einer aktualisierten Zeitinformation über den Zusatzinhalt aus einem Datenspeicher; und
synchronisieren, auf einem Prozessor der Zusatzvorrichtung (125; 225), des zusätzlichen Inhalts mit dem primären Inhalt unter Verwendung der aktualisierten Zeitinformation, wobei die aktualisierte Zeitinformation auf einer Pause in der Präsentation des primären Inhalts basiert, wodurch die Synchronisierung eine verzögerte Präsentation eines Teils des zusätzlichen Inhalts zur Folge hat,
wobei der primäre Inhalt ein auf Anfrage bereitgestellter (*on-demand*) Inhalt ist,
wobei die Zeitinformation eine dynamische Zeitinformation beinhaltet, die sich auf ein Ereignis im primären Inhalt bezieht,
wobei die Zeitinformation des Weiteren Zeitstempel beinhaltet, die explicit je Ereignis im Zusatzinhalt bereitgestellt werden, und
wobei die Zeitinformation spezifisch für eine Sitzung ist, insofern sie **durch** eine Sitzungskennung identifiziert wird.

2. Ein computerimplementiertes Verfahren nach Anspruch 1, wobei die Zeitinformation relativ zu einem vorbestimmten Zeitpunkt bereitgestellt wird.

3. Ein computerimplementiertes Verfahren nach Anspruch 1 oder 2, wobei die Zeitinformation relativ zu einem Startpunkt der Wiedergabe eines Videos auf Anfrage (*Video on demand*) bereitgestellt wird.

4. Ein computerimplementiertes Verfahren nach Anspruch 3, wobei ein Synchronisationspunkt explizit an die Zusatzvorrichtung (125; 225) geliefert wird.

5. Ein computerimplementiertes Verfahren nach irgendeinem der vorhergehenden Ansprüche, wobei der Zusatzinhalt Anweisungen für eine Softwareanwendung beinhaltet, die sich auf der Zusatzvorrichtung (125; 225) befindet.

6. Ein computerimplementiertes Verfahren nach irgendeinem der vorhergehenden Ansprüche, wobei der Zusatzinhalt mindestens einen der Folgenden beinhaltet: eine Webseite, *Rich Media,* Video und Audio.

7. Ein computerimplementiertes Verfahren nach irgendeinem der vorhergehenden Ansprüche, wobei der Zusatzinhalt mindestens einen der Folgenden beinhaltet: Werbungen, Sachinformationen, Informationen sozialer Netzwerke, Empfehlungen, ein Quiz, ein Spiel, eine Abstimmungsanwendung, historische Informationen, Kaufinformationen, Kartenmaterial, *Links* zu weiteren Informationen, Buchungsinformationen, die sich auf den primären Inhalt beziehen.

8. Ein computerimplementiertes Verfahren nach irgendeinem der vorhergehenden Ansprüche, wobei der Zusatzinhalt entsprechend einem der Folgenden angepasst wird: ein Standort der Zusatzvorrichtung (125; 225), ein mit der Zusatzvorrichtung (125; 225) assoziierter Ort, eine mit der Zusatzvorrichtung (125; 225) assoziierte Sprache, ein Gebietsschema der Zusatzvorrichtung (125; 225), eine Bildschirmauflösung der Zusatzvorrichtung (125; 225), ein Merkmal der Software oder der Hardware der Zusatzvorrichtung (125; 225), ein von der Zusatzvorrichtung (125; 225) zuvor erhaltenes Cookie, ein Zustand einer auf der Zusatzvorrichtung (125; 225) laufenden Anwendung, ein Zeitpunkt der Anfrage von Inhalt und eine Internetprotokoll-Adresse der Zusatzvorrichtung (125; 225).

9. Ein Computerprogrammprodukt, das computerlesbare Anweisungen enthält, die, wenn sie in ein Computersystem geladen werden und dort ausgeführt werden, das Computersystem dazu bringen, Operationen entsprechend eines Verfahrens nach irgendeinem der vorhergehenden Ansprüche durchzuführen.

10. Ein System zur Koordination eines zusätzlichen Inhalts mit einem primären Inhalt, auf unterschiedlichen Vorrichtungen, das Folgendes beinhaltet:
einen *Content-Server* (115; 215), der Folgendes beinhaltet:
ein Synchronisierungsmodul, das Zeitinformation über den Zusatzinhalt enthält;
eine Übertragungsschnittstelle zur Übertragung eines zusätzlichen Inhalts und der Zeitinformation; und
eine zusätzliche Vorrichtung (125; 225), die Folgendes beinhaltet:
eine Empfangsschnittstelle für den Empfang des zusätzlichen Inhalts und der Zeitinformation vom *Content-Server* (115; 215);
ein Zeitsteuerungsmodul, das die Zeitinformation interpretiert und einen Zeitpunkt für die Präsentation bzw. eines Präsentations-Zeitpunktes des zusätzlichen Inhalts bestimmt;
ein Präsentationsmodul zur Präsentation des zusätzlichen Inhalts entsprechend des Präsentations-Zeitpunktes und zur Präsentation des primären Inhalt;
**dadurch gekennzeichnet, dass** es des Weiteren Folgendes beinhaltet:
ein Modul zum Empfang, an
einer Netzwerkschnittstelle der zusätzlichen Vorrichtung (125; 225), einer aktualisierten Zeitinformation über den Zusatzinhalt aus einem Datenspeicher; und
das Modul zur Synchronisierung, auf einem Prozessor der Zusatzvorrichtung (125; 225), des zusätzlichen Inhalts mit dem primären Inhalt unter Verwendung der aktualisierten Zeitinformation, wobei die aktualisierte Zeitinformation auf einer Pause in der Präsentation des primären Inhalts basiert, wodurch die Synchronisierung eine verzögerte Präsentation eines Teils des zusätzlichen Inhalts zur Folge hat,
wobei der primäre Inhalt ein auf Anfrage bereitgestellter (*on-demand*) Inhalt ist,
wobei die Zeitinformation eine dynamische Zeitinformation ist, die dem primären Inhalt zugeordnet ist, im Zusammenhang mit einem Ereignis im primären Inhalt,
wobei die Zeitinformation des Weiteren Zeitstempel beinhaltet, die explicit je Ereignis im Zusatzinhalt bereitgestellt werden, und
wobei die Zeitinformation spezifisch für eine Sitzung ist, insofern sie durch eine Sitzungskennung identifiziert wird.

11. Ein System nach Anspruch 10, wobei die dynamische Zeitinformation mindestens einen der Folgenden beinhaltet: einen Startpunkt der Wiedergabe, einen Zeitpunkt der Pause und einen Zeitpunkt für das Springen an eine gewünschte Position.

## Revendications

1. Un procédé mis en oeuvre par ordinateur pour coordonner la présentation d'un contenu auxiliaire dans un dispositif auxiliaire (125 ; 225) avec un contenu primaire dans un dispositif primaire (110 ; 210), où les dispositifs primaire (110 ; 210) et auxiliaire (125 ; 225) sont des dispositifs distincts, incluant le fait de :
recevoir, dans une interface réseau du dispositif auxiliaire (125 ; 225), le contenu auxiliaire et une information de temporisation concernant le contenu auxiliaire à partir d'un magasin de données, sachant que l'information de temporisation se rapporte à un point dans le temps, permet la synchronisation du contenu auxiliaire avec le contenu primaire ;
synchroniser, dans un processeur du dispositif auxiliaire (125 ; 225), le contenu auxiliaire avec le contenu primaire en utilisant l'information de temporisation ;
présenter le contenu auxiliaire sur le dispositif auxiliaire (125 ; 225) et présenter le contenu primaire sur le dispositif primaire (110 ; 210),
**caractérisé par le fait de :**
recevoir, dans une interface réseau du dispositif auxiliaire (125 ; 225), une information de temporisation actualisée concernant le contenu auxiliaire à partir d'un magasin de données ; et
synchroniser, dans un processeur du dispositif auxiliaire (125 ; 225), le contenu auxiliaire avec le contenu primaire en utilisant l'information de temporisation actualisée, l'information de temporisation actualisée se basant sur une pause dans la présentation du contenu primaire, ainsi la synchronisation entraîne une présentation retardée d'une partie du contenu auxiliaire,
sachant que le contenu primaire est un contenu sur demande,
sachant que l'information de temporisation inclut une information de temporisation dynamique concernant un évènement dans le contenu primaire,
sachant que l'information de temporisation inclut en outre des horodateurs, qui sont fournis explicitement pour chacun des évènements dans le contenu auxiliaire, et
sachant que l'information de temporisation est spécifique pour une session en ce qu'elle est identifiée par un identificateur de session.

2. Un procédé mis en oeuvre par ordinateur d'après la revendication 1, sachant que l'information de temporisation est fournie relativement à des point prédéterminés dans le temps.

3. Un procédé mis en oeuvre par ordinateur d'après la revendication 1 ou 2, sachant que l'information de temporisation est fournie relativement à un point de départ de la lecture d'une vidéo sur demande.

4. Un procédé mis en oeuvre par ordinateur d'après la revendication 3, sachant qu'un point de synchronisation est fourni explicitement au dispositif auxiliaire (125 ; 225).

5. Un procédé mis en oeuvre par ordinateur d'après une quelconque des revendications précédentes, sachant que le contenu auxiliaire inclut des instructions pour une application logicielle résidant dans le dispositif auxiliaire (125 ; 225).

6. Un procédé mis en oeuvre par ordinateur d'après une quelconque des revendications précédentes, sachant que le contenu auxiliaire inclut au moins un des suivants : une page web, un contenu multimédia enrichi, vidéo et audio.

7. Un procédé mis en oeuvre par ordinateur d'après une quelconque des revendications précédentes, sachant que le contenu auxiliaire inclut au moins un des suivants :des annonces publicitaires, des informations factuelles, des informations de réseaux sociaux, des recommandations, un quiz, un jeu, une application de vote, des informations historiques, des informations d'achat, des cartes, des liens vers d'autres informations et des informations de réservation, concernant le contenu primaire.

8. Un procédé mis en oeuvre par ordinateur d'après une quelconque des revendications précédentes, sachant que le contenu auxiliaire est adapté conformément à au moins un des suivants : un emplacement du dispositif auxiliaire (125 ; 225), un emplacement associé au dispositif auxiliaire (125 ; 225), un langage associé au dispositif auxiliaire (125 ; 225), des paramètres régionaux du dispositif auxiliaire (125 ; 225), une résolution d'affichage du dispositif auxiliaire (125 ; 225), des caractéristiques matérielles et logicielles du dispositif auxiliaire (125 ; 225), un témoin de connexion (*cookie*) reçu au préalable par le dispositif auxiliaire (125 ; 225), un état d'une application s'exécutant sur le dispositif auxiliaire (125 ; 225), un horodatage d'une requête de contenu et une adresse de protocole Internet du dispositif auxiliaire (125 ; 225).

9. Un produit programme informatique incluant des instructions lisibles par un ordinateur, lesquelles, quand elles sont chargées et exécutées dans un système informatique, amènent le système informatique à effectuer des opérations conformes à un procédé d'après une quelconque des revendications précédentes.

10. Un système pour coordonner un contenu auxiliaire avec un contenu primaire sur des dispositifs distincts, incluant :
un serveur de contenu (115 ; 215), incluant :
un module de synchronisation incluant de l'information de temporisation concernant le contenu auxiliaire ;
une interface de transmission, pour transmettre le contenu auxiliaire et l'information de temporisation ; et
un dispositif auxiliaire (125 ; 225), incluant :
une interface de réception pour recevoir le contenu auxiliaire et l'information de temporisation de la part du serveur de contenu (115 ; 215) ;
un module de temporisation qui interprète l'information de temporisation et détermine un horodatage de présentation du contenu auxiliaire ;
un module de présentation, pour présenter le contenu auxiliaire selon l'horodatage de présentation et pour présenter le contenu primaire ;
**caractérisé par** le fait d'inclure en outre :
un module pour recevoir, dans une interface réseau du dispositif auxiliaire (125 ; 225), une information de temporisation actualisée concernant le contenu auxiliaire à partir d'un magasin de données ; et
le module pour synchroniser, dans un processeur du dispositif auxiliaire (125 ; 225), le contenu auxiliaire avec le contenu primaire en utilisant l'information de temporisation actualisée, l'information de temporisation actualisée se basant sur une pause dans la présentation du contenu primaire, ainsi la synchronisation entraîne une présentation retardée d'une partie du contenu auxiliaire,
sachant que le contenu primaire est un contenu sur demande,
sachant que l'information de temporisation est une information de temporisation dynamique associée au contenu primaire concernant un évènement dans le contenu primaire,
sachant que l'information de temporisation inclut en outre des horodateurs, qui sont fournis explicitement pour chacun des évènements dans le contenu auxiliaire, et
sachant que l'information de temporisation est spécifique pour une session en ce qu'elle est identifiée par un identificateur de session.

11. Un système d'après la revendication 10, sachant que l'information de temporisation dynamique inclut au moins un des suivants : un point de départ de la lecture, un horodatage d'une pause et un horodatage relatif à la fonction d'aller directement à une certaine position.
